# EUROPEAN PATENT APPLICATION

(11) **EP 2 139 003 A2**
(43) Date of publication of application: **30.12.2009**
(21) Application number: 09003611.2
(22) Date of filing: 12.03.2009
(51) Int. Cl.: G11B 20/00, H04N 7/167

(54) **Recording apparatus, reproducing apparatus and recording medium to assign the same CCI to a set of packets in a transport stream**

(30) Priority: 27.06.2008 JP 2008169606
(71) Applicant: Kabushiki Kaisha Toshiba, Minato-ku Tokyo (JP)
(72) Inventor: Kimura, Takuji, Tokyo (JP)
(74) Representative: HOFFMANN EITLE

(57) **Abstract**

A recording apparatus includes: a packet generating module configured to generate a control packet and a chain of packets based on content data, the control packet having copy control information and chained packet number information, the chain of packets corresponding to the chained packet number information; and a writing module configured to write the control packet and the chain of packets into a recording medium.

## Description

### CROSS REFERENCE TO RELATED APPLICATION(S)

The present disclosure relates to the subject matters contained in Japanese Patent Application No. 2008-169606 filed on June 27, 2008, which are incorporated herein by reference in its entirety.

### FIELD

The present invention relates to a recording apparatus, a reproducing apparatus and a recording medium for recording or reproducing data.

### BACKGROUND

A recording/reproducing apparatus is used for recording/reproducing content data as a subject of copyright protection on/from a recording medium such as a memory card. For example, there are an SD-Video standard and an SDSD-Video standard as recording formats for recording MPEG2-TS format digital contents on a recording medium. These use CPRM (Content Protection for Recordable Media) as copyright protection technology. Copy control information (hereinafter referred to as CCI) for restricting content copying is used in the CPRM.

Content data may be divided into chained packets (a chain of packets) so that each packet can be processed (encrypted or decrypted). The range of the chain has a fixed length. For example, in ISDB-T Mobile Video Profile (a profile for recording/reproducing a terrestrial digital one-segment broadcast), a copyright protection control packet in which CCI information is written is added periodically (at intervals of 31 packets). In accordance with the contents of CCI, 31 packets following the control packet are encrypted when copyright protection is required, but 31 packets following the control packet are recorded without encryption when copyright protection is not required (copy free).

There has been proposed a technique for improving efficiency in decryption of content files. An example of such technique is disclosed in JP-A-2007-274715 (counterpart U.S. publication is: US 2007/0198858 A1).

As described above, in ISDB-T Mobile Video Profile, the range of the chain for encryption has a fixed length. It is impossible to change the range of the chain in the middle of content in accordance with a bit rate or CCI. For example, in Japanese terrestrial digital broadcasting, broadcast methods (such as one-segment, HD (high definition) and SD (Standard Definition)) widely different in bit rate are mixed. The bit rate (about 18 Mbps) in the HD broadcast is not lower than 30 times as high as the bit rate (about 500 Kbps) in the one-segment broadcast. For this reason, the time required for transmitting the same number of packets in the HD broadcast is not longer than about 1/30 as long as the time required in the one-segment broadcast. To insert a control packet with CCI written therein at intervals of 31 packets in the same manner as in the one-segment broadcast is not effective to the HD broadcast.

### SUMMARY

Therefore, one of objects of the invention is to provide a recording apparatus, a reproducing apparatus and a recording medium in which the number of chained packets can be changed appropriately.

According to a first aspect of the present invention, there is provided a recording apparatus including: a packet generating module configured to generate a control packet and a chain of packets based on content data, the control packet having copy control information and chained packet number information, the chain of packets corresponding to the chained packet number information; and a writing module configured to write the control packet and the chain of packets into a recording medium.

According to a second aspect of the present invention, there is provided a reproducing apparatus including: a reading module configured to read a control packet and a chain of packets from a recording medium, the control packet having copy control information and chained packet number information, the chain of packets corresponding to the chained packet number information; and a content data generating module configured to generate content data from the control packet and the chain of packets.

According to a third aspect of the present invention, there is provided a recording medium including: at least one file containing a control packet and a chain of packets, the control packet having copy control information and chained packet number information, the chain of packets corresponding to the chained packet number information; and a management file configured to be used for managing the file.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing a recording/reproducing apparatus 100 according to an embodiment of the invention.
Fig. 2 is a schematic view showing a storage area of an SD memory card on which contents are recorded.
Fig. 3 is a view showing an example of the data structure of a content recorded on the SD memory card.
Fig. 4 is a schematic view showing continuous files Fa to Fc of an encrypted content.
Fig. 5 is a schematic view showing a storage area of an HDD on which contents are recorded.
Fig. 6 is a flowchart showing an example of a recording procedure in the recording/reproducing apparatus 100.
Fig. 7 is a diagram showing the contents of an arithmetic operation at the time of encrypting chain unit data.
Fig. 8 is a flowchart showing an example of a reproducing procedure in the recording/reproducing apparatus 100.
Fig. 9 is a diagram showing the contents of an arithmetic operation at the time of decrypting a content file.

### DETAILED DESCRIPTION OF THE EMBODIMENTS

An embodiment of the invention will be described below in detail with reference to the drawings.

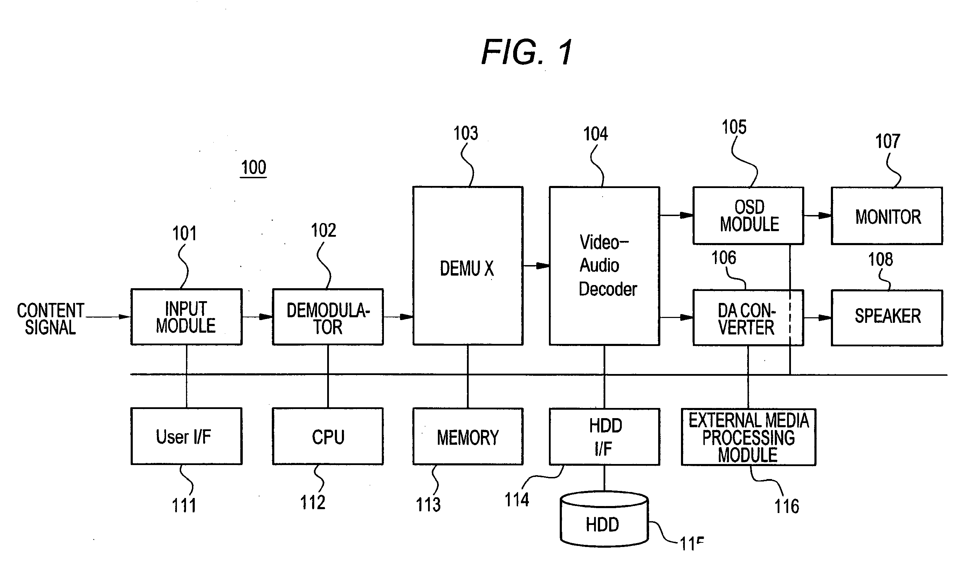

Fig. 1 is a block diagram showing a recording/reproducing apparatus 100 according to an embodiment. The recording/reproducing apparatus 100 includes an input module 101, a demodulator 102, a demultiplexer (DEMUX) 103, a video/audio decoder 104, an OSD (On Screen Display) module 105, a DA converter 106, a monitor 107, a speaker 108, a user interface (I/F) 111, a CPU (Central Processing Unit) 112, a memory 113, an HDD (Hard Disk Drive) interface 114, an HDD 115, and an external media processing module 116.

The input module 101 inputs a content signal. For example, the content signal is a broadcast signal distributed from a broadcast station. The demodulator 102 generates a transport stream (hereinafter referred to as "TS") by demodulating the content signal. The TS is a multiplexed signal containing an MPEG-2 signal and a management signal.

The DUMUX 103 demultiplexes the TS input from the demodulator 102 into an MPEG-2 video/audio signal, a management signal, etc. and outputs these signals to the video/audio decoder 104.

The video/audio decoder 104 generates a video signal and an audio signal by decoding the video/audio signal input from the DEMUX 103 and outputs these signals to the OSD module 105 and the DA converter 106 respectively.

The OSD module 105 superimposes a menu signal on the video signal. The DA converter 106 converts the digital audio signal into an analog audio signal. The monitor 107 is a display device such as a CRT or a liquid crystal display device. The speaker 108 is an audio output device.

The user I/F 111 is connected to a radio receiving portion and a key input module which are not shown, and receives control information. The radio receiving portion receives the control information which is transmitted from a remote controller by radio (e.g. infrared radiation). The key input module can input various kinds of control information in the same manner as the remote controller.

The CPU 112 controls other components provided in the recording/reproducing apparatus 100 and serves as the following modules (1) and (2).
(1) A packet generating module configured to generate a control packet and a chain of packets based on content data, the control packet having copy control information and chained packet number information, the chain of packets corresponding to the chained packet number information.
(2) A content data generating module configured to generate content data from the control packet and the chain of packets.

The memory 113 has an ROM (Read Only Memory), an RAM (Random Access Memory), and an NVRAM (Non Volatile RAM). Programs, etc. necessary for operation of the CPU 112 are stored in the ROM. Programs, data, etc. used at the time of operation of the CPU 112 are written in the RAM.

The HDD interface 114 controls writing/reading of data in/from the HDD 115. Encrypted contents are recorded on the HDD 115. Incidentally, a storage area in the HDD 115 will be described later in detail.

The external media processing module 116 is a processing device such as a card I/F which writes encrypted contents in external recording media such as a memory card (SD memory) and an optical disc.

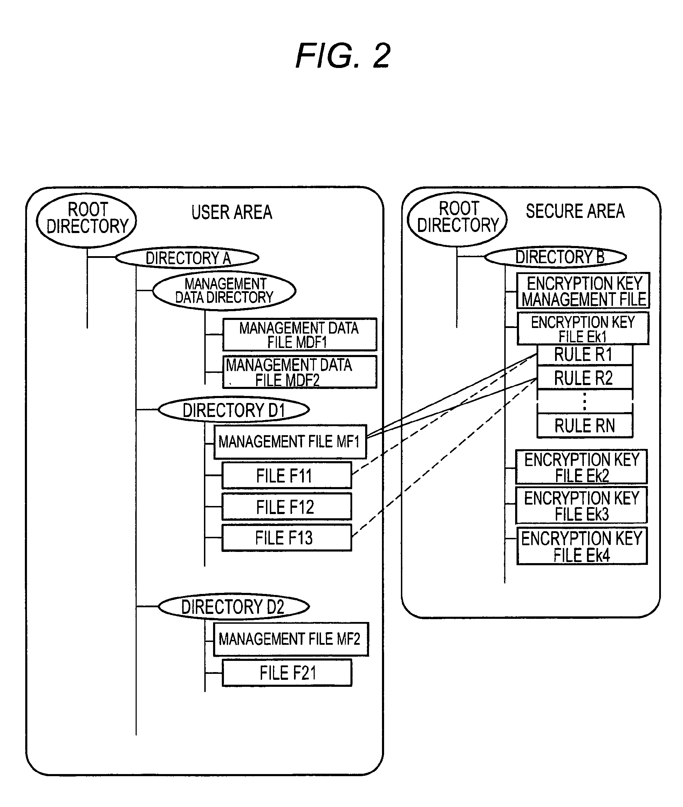

Details of external recording media will be described below while an SD memory card is taken as an example of the external recording media. Fig. 2 is a schematic view showing a storage area of an SD memory card where contents are recorded.

The SD memory card is a memory card conformable to CPRM (Content Protection for Recordable Media) technology which is one of copyright protection functions. The SD memory card has an SD input/output portion (SD I/O), a memory controller, and a flash memory. The SD I/O is an interface with the external media processing module 116. As shown in Fig. 2, the storage area (flash memory) of the SD memory card is partitioned into a secure area and a user area.

The secure area is a storage area restricted in access from the recording/reproducing apparatus 100. When the recording/reproducing apparatus 100 is licensed for the CPRM technology (i.e. when the recording/reproducing apparatus 100 conforms to the copyright protection technology), the recording/reproducing apparatus 100 is permitted to access the secure area. On the other hand, when the recording/reproducing apparatus 100 does not conform to the copyright protection technology, the recording/reproducing apparatus 100 is forbidden to access the secure area.

An encryption key management file, encryption key files Ek1 to Ek4, etc. are stored in a directory such as directory B in Fig. 2 under a root directory in the secure area. The encryption key management file is a file for managing the encryption key files. Rules such as rule R1, rule R2, ..., and rule RN are stored in each of the encryption key files Ek1 to Ek4. The rules R1 to RN are encryption keys for encrypting files obtained by dividing a content file, respectively.

The user area is an area permitted (not restricted) to be accessed from the recording/reproducing apparatus 100 regardless of the copyright protection technology.

Directories D1, D2, etc. and a management data directory are provided in a directory such as directory A in Fig. 2 under the root directory in the user area.

The directories D1, D2, etc. are directories in which content files are stored. Files F11, F12, F13, etc. and a management file MF1 are stored in the directory D1. These files F11, F12, F13, etc. are encrypted files which are obtained in such a manner that a content file is divided into files by a predetermined storage unit and the files are encrypted.

The management file MF1 is a file of data management information for managing reading of the files F11, F12, F13, etc. Destinations to be referred to for reading data are designated by the management file MF1. For example, the rules R1 and R2 of the encryption key file Ek1 in the secure area are designated as the destinations to be referred to. Accordingly, the respective files F11, F12, F13, etc. are decoded according to the designated rules. For example, the file F11 is decoded according to the rule R1 and the file F13 is decoded according to the rule R2.

A management file MF2 and files F21, etc. are stored in the directory D2. The files F21, etc. are encrypted files. The management file MF2 is a file for managing the files F21, etc.

Management data files MDF1 and MDF2 are stored in the management data directory. The management data files MDF1 and MDF2 are files for storing general information (e.g. total recording time) of contents recorded on directories under the directory A.

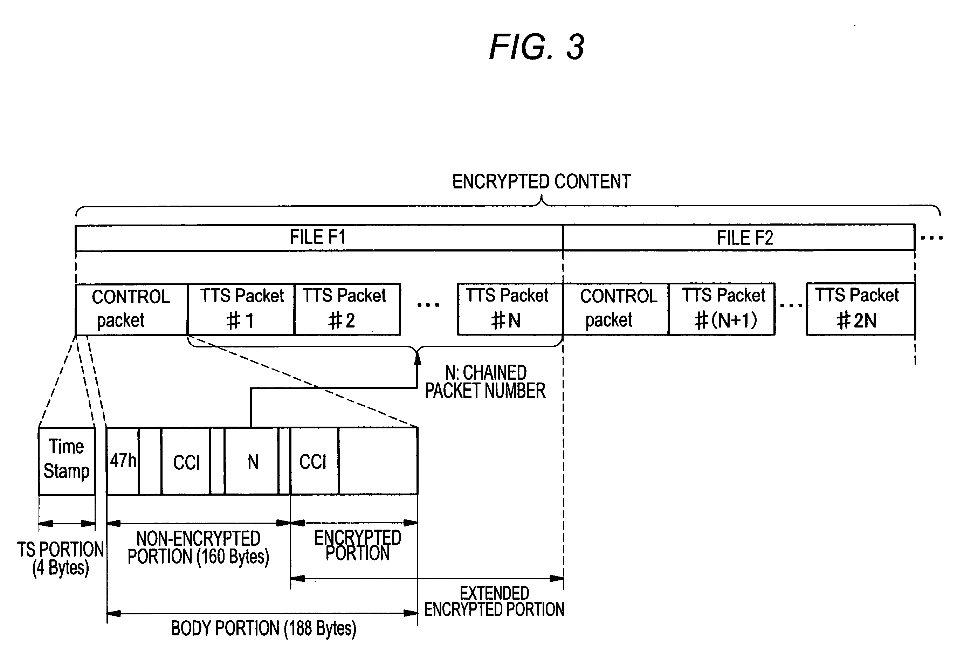

Fig. 3 is a view showing an example of the data structure of contents recorded on an SD memory card. As shown in Fig. 3, contents (encrypted contents) are separated into files F1, F2, F3, etc. by a storage unit so that the files F1, F2, F3, etc. are stored in a user area of the SD memory card. The inside of the file F1 or the like is encrypted in a chaining mode. The chaining mode will be described later.

One file has a control packet, and at least one time-stamped transport stream packet (hereinafter referred to as TTS packet).

Specifically, as shown in Fig. 3, the first file F1 has a control packet, and TTS packets #1 to #N. The next file F2 has a control packet, and TTS packets #(N+1) to #2N. When a block encryption type chaining mode is employed, the control packet at the head of the file F1 has no preceding packets to be used for the encryption, and therefore, the file F1 is being encrypted from an intermediate block that is positioned after the control packet.

The control packet has a TS portion of first 4 bytes, and a body portion of 188 bytes following the TS portion. The TS portion indicates a timestamp (relative time in contents). The body portion is classified into a non-encrypted portion and a encrypted portion. The non-encrypted portion contains a sync byte (47h) indicating the top of the transport stream, and copy control information (hereinafter referred to as CCI) and chained packet number N which are written in predetermined positions from the top, respectively. The chained packet number N indicates the number of TTS packets (chained packets). The CCI will be described later.

The CCI is inserted in a top position of the encrypted portion. The CCI exhibits the same information as the CCI of the non-encrypted portion. The encrypted portion of the control packet and the TTS packets #1 to #N form one encrypted portion (extended encrypted portion). The extended encrypted portion can be obtained in such a manner that data as a subject of encryption is divided into blocks each having a predetermined length by a predetermined encryption algorithm and each block is encrypted in a chaining mode as a predetermined encryption mode.

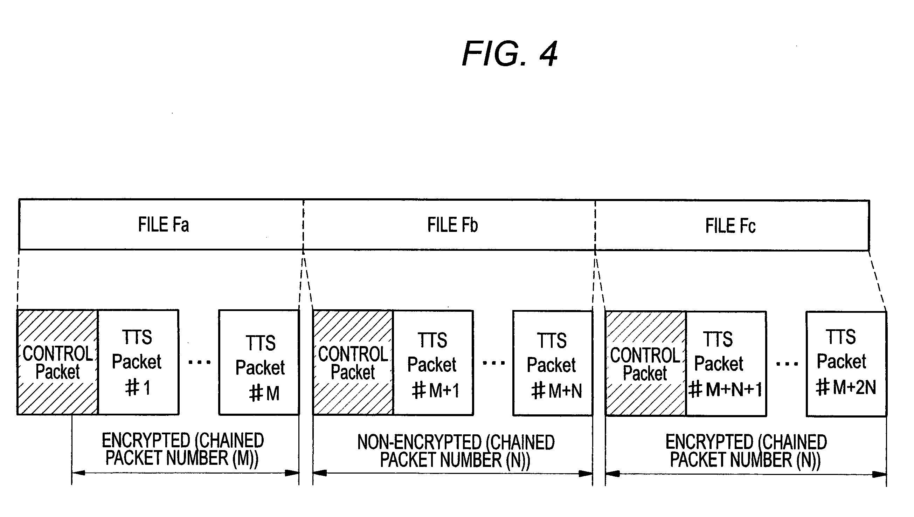

Fig. 4 is a schematic view showing continuous files Fa to Fc of encrypted contents. The presence/absence of encryption and the number of chained packets in the extended encrypted portion vary according to CCI and chained packet number N in the control packet. The extended encrypted portions of the files Fa to Fc are encrypted, non-encrypted and encrypted, respectively. The respective numbers of chained packets in the files Fa to Fc are M, N and N which are different. In this manner, the presence/absence of encryption and the number of chained packets can be changed appropriately in accordance with each of the continuous files.

A digital copy control descriptor and a content availability descriptor are set in the CCI. The CCI is described with a data length of not larger than 8 bits as the sum of the digital copy control descriptor and the content availability descriptor. The descriptors can be used in combination so that permission/forbiddance of digital recording and contents of copy control can be designated.

A copy control type and digital recording encryption mode control data are set in the digital copy control descriptor. The type of the encryption mode is set in the content availability descriptor. For example, the state of the copy control type of "01" or "11" indicates that copying is disabled. The state of the copy control type of "10", the digital recording encryption mode control data of "00" and the content availability descriptor of "0" indicates that copying is enabled without restriction (without encryption).

The state of the copy control type of "10" and the digital recording encryption mode control data of "10" indicates that only first copy generation is enabled. The term "only first copy generation is enabled" means that copying is performed while a bit flag is changed to a copy-disabled state at the time of recording of first data generation.

That is, the CCI is information for defining data reading conditions such as "copy free", "copy once (copy 10)", "copy never", etc. at the time of data reading.

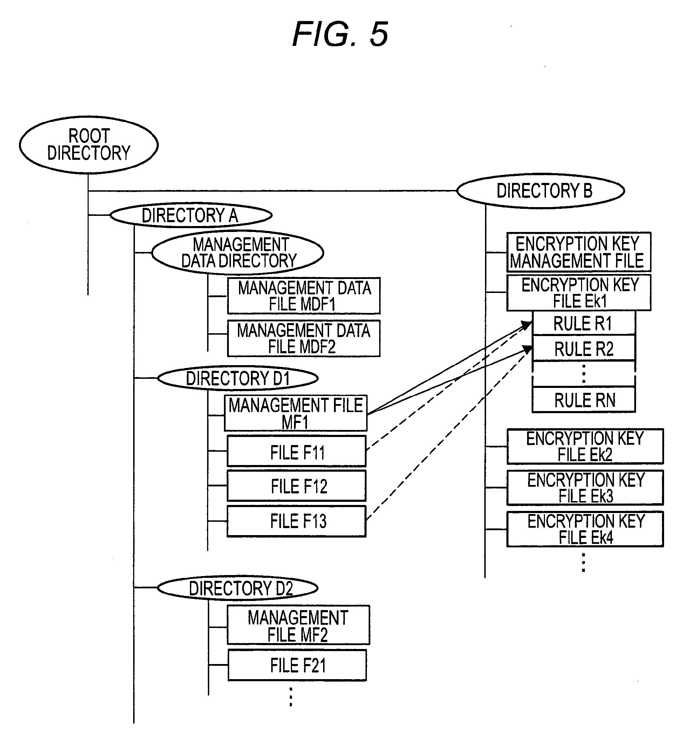

Fig. 5 is a schematic view showing a storage area of the HDD 115 on which contents are recorded. Directories A and B are disposed in the storage area of the HDD 115 like the SD memory card. However, in the HDD 115, there is no distinction between a user area and a secure area, so that permission/forbiddance of access due to the presence/absence of CPRM technology license does not occur. Incidentally, when the directory B is encrypted, access to the directory B can be substantially restricted. The storage contents of the HDD 155 are substantially the same as those of the SD memory card in other respects and detailed description thereof will be omitted.

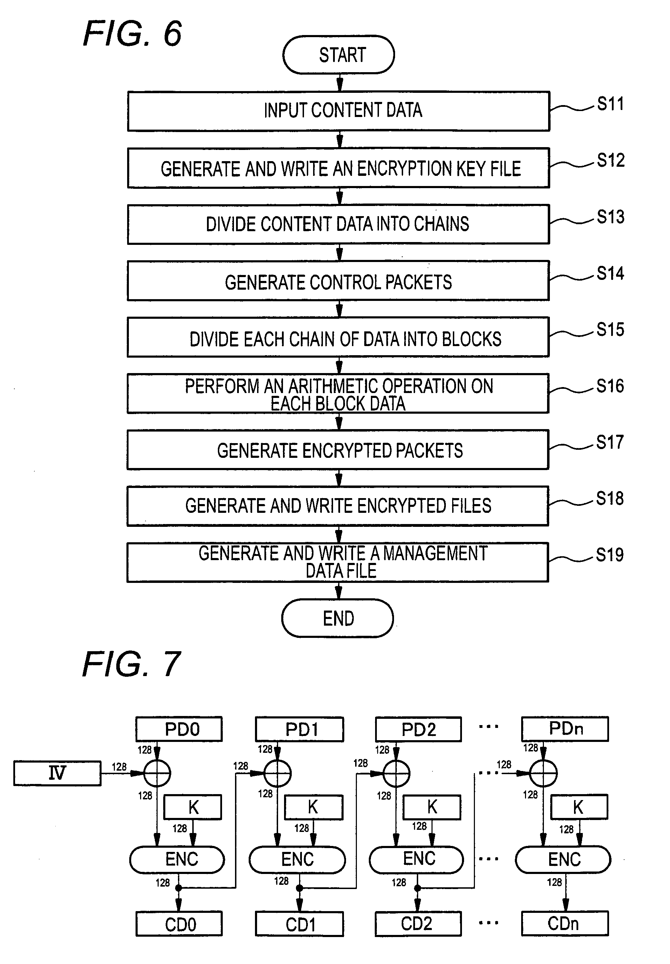

The operation of the recording/reproducing apparatus 100 will be described below. Fig. 6 is a flowchart showing an example of a recording procedure in the recording/reproducing apparatus 100.

### A. Recording of Content

### (1) Input Content Data (step S11)

Content data is input to the input module 101. For example, in the condition that a tuner is connected to the input module 101 and a digital broadcast program is selected, the selected program is input through the input module 101. The selected program can be viewed and listened to through the monitor 107 and the speaker 108.

### (2) Generate and Write Encryption Key File (step S12)

When the CPU 112 is instructed through the user I/F 111 to record the content data, the CPU 112 performs a process in which an encryption key for encrypting a recording content is stored in the secure area of the SD memory card by two-way authentication. That is, the CPU 112 generates an encryption key according to a predetermined rule and stores the encryption key in the secure area of the SD memory card.

The CPU 112 further generates a new recording directory in the user area.

### (3) Divide Content Data into Chains (step S13)

The CPU 112 divides MPEG2-TTS format content data into chains. One chain means an amount of data corresponding to a set of a number of packets corresponding to the number of chained packets. A chain of content data after division is referred to as "chain unit data".

### (4) Generate Control Packets (step S14)

Control packets are generated. That is, CCI contained in each chain unit data is acquired and written in each control packet.

### (5) Encrypt Chain Unit Data (steps S15 to S17)

Each chain unit data is encrypted. Fig. 7 is a diagram showing the contents of an arithmetic operation at the time of encrypting each chain unit data. In this example, a CBC (Cipher Book Chaining) mode is used as a chaining mode which is one of block encryption methods.

In the CBC mode, two adjacent blocks are used for encryption in such a manner that the current block is encrypted with use of an encryption result of the previous block as an input parameter. Accordingly, a stationary bit pattern contained in a plaintext which has been not encrypted yet can be disordered to achieve high-security encryption.

### 1) Divide Chain Unit Data into Blocks (step S15)

Each chain unit data is divided into data corresponding to a chain of packets and further divided into plain data PD0 to PDn by a block length (e.g. of 128 bits). That is, one chain of packets corresponds to the plurality of plain data PD0 to PDn.

### 2) Perform Arithmetic Operation on Block Data and Generate Encrypted Packet (steps S16 and S17)

After an arithmetic operation is performed on each block data (plain data), encryption is performed to generate encrypted block data. The first plain data PD0 is XORed with a encryption initial value (IV) and then encrypted with an encryption key K, so that coded data (encrypted block data) CDO is output.

Each of the plain data PD1 to PDn after the first plain data PD0 is XORed with the previous encrypted data (corresponding one of CDO to CDn-1) and then encrypted with the encryption key K. Then, each encrypted packet is generated from such a plurality of encrypted block data.

### (6) Generate and Write Encrypted File (step S18)

The encrypted packets (a control packet and a chain of packets) are combined to generate an encrypted file. Encrypted files generated in this manner are written in the user area.

### (7) Generate and Write Management Data File (step S19)

The CPU 112 stores files (e.g. a management data file MDF1, a management file MF1, etc.) for managing the content files in corresponding directories of the user area.

In the aforementioned manner, the content is written in the SD memory card. Incidentally, the content can be written in the HDD 115 almost in the same manner. This is because the data structure of the HDD 115 can be formed to be substantially the same as that of the SD memory card except the presence/absence of partition into the user area and the secure area.

### B. Reproduction of Content

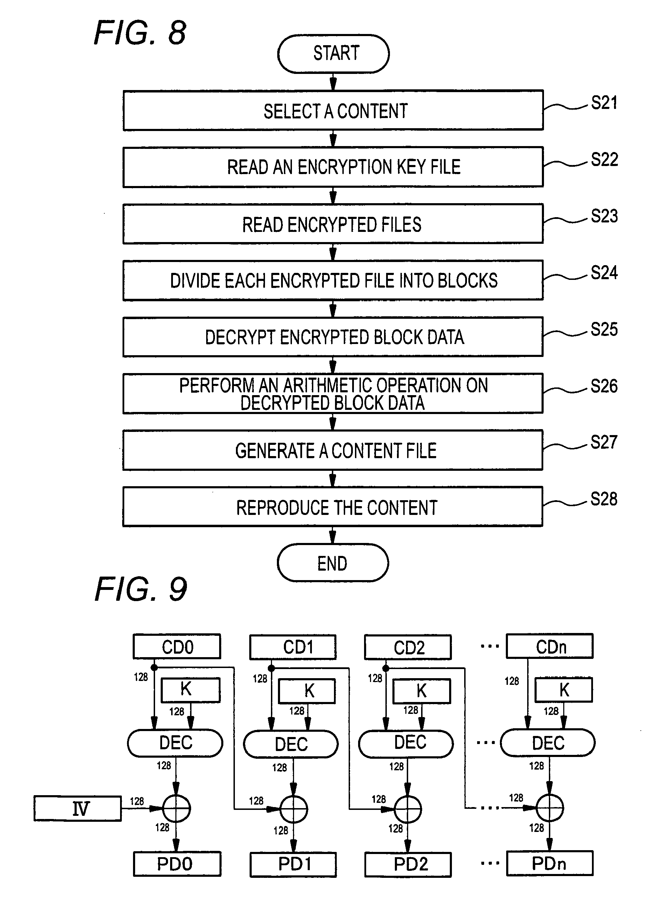

Fig. 8 is a flowchart showing an example of a reproducing procedure in the recording/reproducing apparatus 100. Reproduction of recoded data stored in the SD memory card will be described here.

### (1) Select Content (step S21)

A desired content is selected from the SD memory card. For example, in the condition that directories of the SD memory card are displayed on the monitor 107, the user selects a desired content from the directories. As a result, files for managing content files as a subject of copying, for example, a management file MF1, etc. are read from the user area of the SD memory card.

### (2) Read Encryption Key File (step S22)

The CPU 112 reads an encryption key file designated by data of the read management file MF1, from the secure area (S22) . On this occasion, the CPU 112 performs two-way authentication with a memory controller of the SD memory card. Encryption technology using parameters which are set in the receiver side memory 3 and the secure area in advance is used in the two-way authentication.

### (3) Read Encrypted Files (step S23)

The CPU 112 reads content files (encrypted content files), as a subject of copying, stored in the user area of the SD memory card.

### (4) Decrypt Content Files (steps S24 to S27)

Content files are decrypted from the encrypted content files. Fig. 9 is a diagram showing the contents of an arithmetic operation for decrypting a content file from each encrypted content file. In this example, a CBC (Cipher Book Chaining) mode is used as a chaining mode which is one of block cipher methods.

### 1) Divide Encrypted Content File into Blocks (step S24)

Packets (a control packet and a chain of packets) constituting one encrypted content file are divided into coded data (encrypted block data) CDO to CDn by a block length (of 128 bits).

### 2) Decrypt Encrypted Block Data (step S25)

The coded data CD0 to CDn are decrypted with a key (K) to generate decrypted block data.

### 3) Perform Arithmetic Operation on Decrypted Block Data and Generate Content File (steps S26 and S27)

After each decrypted block data is subjected to an arithmetic operation, the decrypted block data are combined to generate a content file.

The decrypted coded data CDO is XORed with an encryption initial value (IV), so that a first coded data CDO is output. Each of the coded data CD1 to CDn following the coded data CD0 is XORed with the previous encrypted data (corresponding one of CDO to CDn-1) instead of IV, so that respective coded data CDO to CDn are output. The output coded data CDO to CDn are combined to generate a content file.

### (5) Reproduce Content (step S28)

Content files generated in this manner can be used for reproducing the content so that the user can view or listen to the content.

The recording/reproducing apparatus 100 according to this embodiment can record and reproduce various content data other than the broadcast signal. With respect to the broadcast, the recording/reproducing apparatus 100 can be applied to a broadcast via a communication network (so-called IP broadcast) other than the television broadcast using electric waves.

The aforementioned CBC mode as a chaining mode is only an example. As block encryption methods, there are various chaining modes other than the CBC mode. For example, a CFB (Cipher Feedback) mode, an OFB (Output Feedback) mode, etc. as other chaining modes may be applied to the present invention.

For example, there are a C-CBC mode, an FCBC mode, an XCBC mode, etc. as CBC mode-based chaining modes. These modes may be applied to the present invention. The C-CBC mode has C2 algorithm defined by CPRM.

As described above with reference to the embodiment, there is provided a recording apparatus, a reproducing apparatus and a recording medium in which the number of chained packets can be changed appropriately.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A recording apparatus comprising:
a packet generating module configured to generate a control packet and a chain of packets based on content data, the control packet having copy control information and chained packet number information, the chain of packets corresponding to the chained packet number information; and
a writing module configured to write the control packet and the chain of packets into a recording medium.

2. The apparatus of Claim 1, wherein the packet generating module generates sets of packets sequentially so that each packet set has a control packet and a chain of packets, and
wherein the writing module writes the packet sets into the recording medium sequentially.

3. The apparatus of Claim 2, wherein the packet sets are different in at least any of the chained packet number information of the control packets.

4. The apparatus of Claim 1, wherein the packet generating module comprises:
a dividing module configured to divide the content data into multistage blocks by a given length;
a processing module configured to perform an arithmetical operation on each of the multistage blocks;
an encryption module configured to encrypt results of the arithmetic operation with key data to generate multistage encrypted blocks; and
a generating module configured to generate a chain of packets based on the multistage encrypted blocks, and
wherein the processing module performs an arithmetic operation on each block and a predetermined value or a value of a previous-stage encrypted block.

5. The apparatus of Claim 1, wherein the chained packet number information is information of a chain length of an encryption method by which the chain of packets is encrypted.

6. A reproducing apparatus comprising:
a reading module configured to read a control packet and a chain of packets from a recording medium, the control packet having copy control information and chained packet number information, the chain of packets corresponding to the chained packet number information; and
a content data generating module configured to generate content data from the control packet and the chain of packets.

7. The apparatus of Claim 6, wherein the content data generating module comprises:
a dividing module configured to divide the chain of packets into multistage blocks by a predetermined length;
a decryption module configured to decrypt the multistage blocks with key data to generate decrypted blocks respectively;
a processing module configured to perform an arithmetic operation on each of the decrypted blocks; and
a combination module configured to combine results of the arithmetic operation to generate the content data, and
wherein the processing module performs an arithmetic operation on each decrypted block and a predetermined value or a value of the previous stage block.

8. A recording medium comprising:
at least one file containing a control packet and a chain of packets, the control packet having copy control information and chained packet number information, the chain of packets corresponding to the chained packet number information; and
a management file configured to be used for managing the file.

9. The recording medium of Claim 8, wherein the chained packet number information is information of a chain length of an encryption method by which the chain of packets is encrypted.
